# EUROPÄISCHE PATENTSCHRIFT

(11) **EP 3 499 207 B1**
(45) Veröffentlichungstag und Bekanntmachung des Hinweises auf die Patenterteilung: **04.08.2021**
(21) Anmeldenummer: 18211973.5
(22) Anmeldetag: 12.12.2018
(51) Int. Cl.: G01M 3/22, G01M 3/20

(54) **DICHTHEITSPRÜFSYSTEM UND VERFAHREN ZUR DICHTHEITSPRÜFUNG EINES BEHÄLTERS**
LEAK TEST SYSTEM AND METHOD FOR PERFORMING A LEAK TEST ON A CONTAINER
SYSTÈME D'ESSAI D'ÉTANCHÉITÉ ET PROCÉDÉ D'ESSAI D'ÉTANCHÉITÉ D'UN RÉCIPIENT

(30) Priorität: 14.12.2017 EP 17207355
(43) Veröffentlichungstag der Anmeldung: 19.06.2019
(73) Patentinhaber: Lippok + Wolf GmbH, 73642 Welzheim (DE)
(72) Erfinder: SOMMER, Kay, 73635 Rudersberg (DE); SCHÄFER, Edgar, 73642 Welzheim (DE)
(74) Vertreter: Zurhorst, Stefan

(56) Entgegenhaltungen:
- CN-A- 106 017 819
- DE-A1- 4 320 363
- JP-A- 2005 164 525
- US-A- 3 762 212

## Beschreibung

Die Erfindung betrifft ein Dichtheitsprüfsystem zur Dichtheitsprüfung eines Behälters mit den Merkmalen nach dem Oberbegriff des Anspruchs 1 sowie ein Prüfverfahren mittels eines solchen Dichtheitsprüfsystems.

Aus der JP 2005 164525 A ist ein Dichtheitsprüfsystem zur Dichtheitsprüfung eines Behälters bekannt. Ein Prüfling, also der zu prüfende Behälter wird in eine Prüfkammer eingebracht. Mittels einer Pumpeinrichtung wird ein Prüfunterdruck in der Prüfkammer erzeugt. In den Prüfling wird ein Gasgemisch aus 5% Wasserstoff und 95% Stickstoff als Prüfgas eingespeist, welches im Falle von Undichtigkeiten aufgrund des außen herrschenden Prüfunterdrucks austritt und von einem Detektor erfasst wird. Um den technischen und finanziellen Aufwand insbesondere für die Pumpen, das Prüfgas und die Messmittel gering zu halten, ist der Prüfunterdruck auf einen Bereich zwischen 0,1 und 250 mbar begrenzt. Die in der Prüfkammer mit dem verbleibenden Restdruck vorhandene Gasmenge ist allerdings hinderlich bei der Ausbreitung des austretenden Prüfgases. Um das ausgetretene Prüfgas zum Detektor zu bringen, wird außerdem ein Transportgas in Form von Luft oder Stickstoff eingespeist.

Das entstehende Gemisch aus Prüf- und Transportgas wird über eine Vakuumpumpe abgesaugt und dabei das Mischungsverhältnis zwischen Wasserstoff und Transportgas bestimmt. Als Sensor wird ein Transistor zum Nachweis von Wasserstoff eingesetzt, welcher auf der Ausblasseite der Pumpe angeordnet ist und unter atmosphärischem Druck arbeitet. Im oben schon genannten Bereich des Prüfunterdrucks zwischen 0,1 und 250 mbar kann mit guter Näherung davon ausgegangen werden, dass die Menge an Gas, die in die Prüfkammer eingeleitet wird, auch durch die Vakuumpumpe gefördert und ausgangsseitig dem Sensor zugeführt wird. Für die Bestimmung des genannten Mischungsverhältnisses als Maß für die Behälterundichtigkeit ist deshalb eine Konstanthaltung des Prüfunterdrucks oder der Pumpensaugleistung weder erforderlich noch angestrebt, was zur Einfachheit des Prozesses beiträgt. Allerdings gibt es Einschränkungen bei der Anwendung: Mit Wasserstoff als Prüfgas kann in der Regel nur eine Leckrate größer 1E-6 mbar 1/s nachgewiesen werden, da der unter Umgebungsdruck arbeitende Transistor als Sensor nicht sehr empfindlich ist. Außerdem ist der Prozentsatz des Wasserstoffs im Prüfgas deutlich beschränkt, um die Bildung von Knallgas zu vermeiden. Das Prüfsystem und der Prozess sind folglich dazu ausgelegt, kostengünstig vergleichsweise grobe Leckraten aufzuspüren.

Bei höheren Anforderungen wird verbreitet ein Dichtheitsprüfsystem mit Massenspektrometer und deutlich ausgeprägterem Prüfunterdruck eingesetzt. Ein entsprechendes Dichtheitsprüfsystem ist aus der US 3,762,212 A bekannt. Das Dichtheitsprüfsystem umfasst eine Prüfkammer, in deren Innenraum ein ungeregelter Prüfunterdruck eingestellt wird, welcher in einem Bereich von 0,01 bis 10 torr entsprechend 0,013 bis 13,3 mbar liegt. Der zu prüfende Behälter wird innenseitig mit Helium als Prüfgas beaufschlagt. Mittels eines Massenspektrometers sollen Teilmengen des Prüfgases im Innenraum der Prüfkammer nachgewiesen und darüber Aussagen über die Dichtigkeit des Behälters getroffen werden.

Die Dichtheitsprüfung mittels Messen eines Spurgases wie z.B. Helium, mit welchem der zu prüfende Behälter befüllt wird, und die Erfassung der austretenden Gasmenge durch ein Massenspektrometer sind weit verbreiteter industrieller Standard, und unter anderem auch nach DIN 1779 definiert. Grundsätzlich kann zur Messung einer Leckrate mittels Massenspektrometer auch jedes andere chemisch stabile oder inerte Gas verwendet werden.

Der Ablauf einer Standard-Dichtheitsprüfung gestaltet sich wie folgt:
1: Start der Kammerevakuierung,
2: Prüfling evakuieren,
3: Prüfling mit Helium befüllen,
4: Warten, bis Messvakuum erreicht ist,
5: Zuschalten des Massenspektrometers, Messen der Leckage,
6: Helium aus dem Prüfling entsorgen, und
7: Kammer und Prüfling mit Luft belüften.

Zum Messen der Leckrate wird ein Prüfunterdruck, das heißt ein Messvakuum in einem Druckbereich von unter 1 mbar und oft noch deutlich darunter angestrebt. Die Evakuierung der Kammer wird durch entsprechende Vakuumpumpen bewerkstelligt, die in der Regel als ein- oder zweistufige Drehschieberpumpen, Wälzkolbenpumpen, Scrollpumpen, Schraubenvakuumpumpen etc. oder deren Kombinationen ausgeführt sind.

Aufgrund des sehr geringen bzw. des ausgeprägten Prüfunterdrucks von < 0,1 mbar bewegt sich das Prüfgas vergleichsweise schnell, da kaum noch Stöße mit anderen Gasmolekülen und Gasatomen stattfinden. Deshalb und aufgrund der Verwendung eines mit diesem geringen Prüfunterdruck messenden Massenspektrometers ist abweichend von der JP 2005 164525 A der Einsatz eines Transportgases nicht erforderlich und auch nicht erwünscht. Das durch eine Leckage in das Vakuumsystem eingebrachte Prüfgas wird durch die Vakuumpumpen abgepumpt, und unter einer konstanten Saugleistung stellt sich nach etwa der fünffachen Zeitkonstante T (5T) ein stabiler Zustand des Heliumpartialdrucks im Vakuumsystem und damit auch der gemessenen Leckrate ein. Die Zeitkonstante T ergibt sich (grob) aus dem Quotienten aus Volumen des Vakuumsystems und dem Saugvermögen der Pumpen sowie dem Leitwert der Leitungen zu den Pumpen.

Bei schlichten Prüfvorgängen genügt es in der Regel stets gemäß Schritt 5 das Massenspektrometer zuzuschalten, wenn ein bestimmter Arbeitsdruck x (z.B. 0,1 mbar = Druck-Triggerpunkt) in der Kammer erreicht ist. Erfolgt die Zuschaltung des Massenspektrometers stets beim gleichen Druck-Triggerpunkt und ist die Dauer des Messschrittes in allen aufeinanderfolgenden Zyklen gleich lang, so erhält man in der Regel eine für Industrieanwendungen hinreichende Stabilität.

Im Vergleich zu Wasserstoff-Messungen bei mittlerem Prüfunterdruck lassen sich mit Helium im Hochvakuum von < 0,1 mbar und unter Verwendung eines Massenspektrometers deutlich geringere Leckraten von bis 1E-9 mbar 1/s, im Labor sogar bis 1E-12 mbar 1/s detektieren.

Allerdings müssen bei solch geringen Drücken verschiedene spezielle Rahmenbedingungen beachtet werden. Zunächst ist der Einsatz spezieller, für die Erzielung der geringen Drücke geeigneter Pumpen erforderlich. Allen hierfür in Frage kommenden Bauformen der Vakuumpumpen ist zu eigen, dass die Saugleistung über dem Arbeitsbereich nicht konstant ist. Dies hat zur Folge, dass die gemessene Leckrate auch von der Charakteristik der Pumpen abhängt:
In den Pausenzeiten, also zwischen den einzelnen Prüfzyklen einer Leckprüfung sättigen sich die Oberflächen der Prüfkammer und auch der Kammerdichtring wieder mit Luft. Im Folgezyklus desorbieren diese Elemente / Oberflächen bei den genannten geringen Drücken von < 1 mbar erneut, was bei höheren Drücken keine oder nur eine untergeordnete Rolle spielt. Je nach Sättigungsgrad der Oberflächen tragen aber bei < 1 mbar die Ausgasungen aus den Oberflächen wesentlich zur Gesamtmenge des Gases bei, womit man signifikante Einflüsse auf die Leckratenmessung erhält. Ein stärkeres Desorbieren sorgt für einen langsameren Druckabfall in der Kammer als eine geringe Desorption. Ist in einem Produktionsprozess der Teiletakt ungleichmäßig, so hat man jeweils bei Beginn der Prüfungen einen unterschiedlichen (Luft-) Sättigungsgrad der Oberflächen und Dichtungen der Prüfkammer. Bei höherem Sättigungsgrad der Oberflächen / mehr Desorption wird die Kammer nach Unterschreiten des Drucktriggers langsamer ausgepumpt. Der Druck in der Kammer am Ende der Messung kann also schwanken. Da die Pumpen bei dem genannten geringen Druck nahe an ihrem Enddruck, also dem maximal mit dieser Pumpe erreichbaren Unterdruck arbeiten, schwankt deren Saugvermögen bzw. deren Saugleistung deutlich mit dem vorherrschenden Unterdruck. Damit schwankt aufgrund des sich ändernden Saugvermögens auch der Messwert. Die sich ergebenden Schwankungen können sich im Bereich von einigen Prozent (etwa 3% bis 10%) bewegen. Bei manchen Applikationen werden aber höhere Anforderungen an die Reproduzierbarkeit der Messwerte gestellt, die mit herkömmlichen Prüfsystemen und Prüfverfahren nicht ohne weiteres erfüllt werden können.

Viele industrielle Güter werden heutzutage aus Kunststoff hergestellt. Im Bereich der pharmazeutischen Industrie gibt es auch Erzeugnisse mit einem hohen Silikonanteil, welche ein besonders hohes Maß an Desorption aufweisen. Ein weiteres Problem ist dabei die chaotische Fertigung verschiedener Produktausführungen (Setups - Kombinationen verschiedener Grundkomponenten), so dass von Prüfzyklus zu Prüfzyklus im Vakuumsystem im Messschritt ein völlig unterschiedliches Maß an Desorption vorherrschen kann, und sich damit der Verlauf des Kammerdrucks sehr unterschiedlich gestalten kann. In solchen Fällen können sich die Messwerte drastisch unterscheiden. Bei der Erprobung einer Messeinrichtung sind hier Schwankungen von weit über 50% möglich, was fern heutiger Ansprüche an die Messtechnik liegt.

Eine weitere Messaufgabe besteht oft darin, dass man analytisch untersuchen muss, ob sich die Leckrate eines über der Zeit kontinuierlich bedrückten Prüflings ändert. Bei einer üblichen Dichtheitsprüfung evakuieren die Vakuumpumpen permanent die Kammer, wodurch einerseits der Kammerdruck und andererseits als Folge davon die Saugleistung stetig abnehmen. Im Extremfall evakuiert man so lange, bis von den Oberflächen keine relevanten Mengen an Gas mehr desorbieren. Faktisch evakuieren die Pumpen dann die Kammern bis an den Enddruck, den die Pumpen erreichen können.

An diesem Punkt haben diese dann nahezu keine Saugleistung mehr. Das Massenspektrometer misst als physikalische Größe den Partialdruck an Helium. Bei konstanter Leckrate wird dieser Partialdruck immer größer, je niedriger das Saugvermögen der Pumpen wird. Da die Saugleistung am Ende einer solchen Langzeitmessung nun sehr gering ist wird eine konstant eingestreute Leckage mit einem viel zu großen Wert gemessen.

Eine mathematische Kompensation solcher und anderer Einflüsse ist jedoch schwierig. Ein weiteres Problem besteht nämlich darin, dass eine Dichtheitsprüfanlage oft eine komplexe Verschaltung sich ändernder Leitwerte darstellt: am Massenspektrometer-Eingang ist meist der Eingang einer Turbopumpe positioniert, deren Saugvermögen bei sinkendem Druck bis auf einen geometrisch bedingten Maximalwert zunimmt, während die Saugleistung der zum Auspumpen von Kammern verwendeten Pumpen bei niedriger werdendem Druck meist gegen Null geht. Dies macht eine rein mathematische Kompensation sehr aufwändig. Da Pumpen im industriellen Bereich außerdem oft sehr schnell mit flüchtigen Fremdmedien kontaminiert sind, entspricht die Saugvermögenskurve auch nicht immer dem Original oder Modell. Ferner führt auch Verschleiß z.B. von Wellendichtringen zu einem Eintrag von Nebenluft, was ebenfalls zur Abweichung vom Nominalverhalten führt. Unter diesen Bedingungen rein mathematisch zu kompensieren ist daher sehr problematisch.

Der Erfindung liegt die Aufgabe zugrunde, ein gattungsgemäßes Prüfsystem derart weiterzubilden, dass die Messgenauigkeit verbessert ist.

Diese Aufgabe wird durch ein Prüfsystem mit den Merkmalen des Anspruchs 1 gelöst.

Der Erfindung liegt des Weiteren die Aufgabe zugrunde, ein Prüfverfahren zur Dichtheitsprüfung von Behältern mit höherer Messgenauigkeit anzugeben.

Diese Aufgabe wird durch ein Prüfverfahren mit den Merkmalen des Anspruchs 9 gelöst.

Die Erfindung betrifft eine Messumgebung mit einem Prüfunterdruck im Innenraum der Prüfkammer von < 0,1 mbar und basiert auf der Idee, die Pumpe bzw. die Pumpen während der Messung in einem eng begrenzten und wiederholbaren Fenster von Betriebsparametern zu betreiben, indem die Saugleistung der Pumpeinrichtung mittels eines Regelkreises zumindest näherungsweise konstant gehalten wird. Dies basiert auf der Erkenntnis, dass der Partialdruck des Prüfgases bestimmt ist von der eingestreuten Leckrate geteilt durch das Saugvermögen der Pumpeinrichtung. Wenn nun bei ausreichend konstanter Leckrate in erfindungsgemäßer Weise auch die Pumpleistung im laufenden Betrieb zumindest näherungsweise konstant gehalten wird, dann kann der mittels des Massenspektrometers ermittelte Partialdruck des Prüfgases als stabiler und zuverlässiger Messwert für die Leckrate herangezogen werden.

Die Konstanthaltung der Saugleistung der Pumpeinrichtung beim Prüfunterdruck von < 0,1 mbar ist nicht trivial, da anders als bei weniger ausgeprägten Unterdruckniveaus nun auch Sekundäreffekte wie das Ausgasen von Kammer- und Dichtungsoberflächen eine signifikante Rolle spielen. Es kommt deshalb gemäß der Erfindung eine Regeleinrichtung zum Einsatz. Die Konstanthaltung der Saugleistung kann dabei beispielsweise bei variierendem Kammerdruck durch eine auf die Pumpeinrichtung einwirkende Regeleinrichtung erreicht werden. In einer vorteilhaften Weiterentwicklung der erfindungsgemäßen Grundidee wird dies jedoch durch eine Stabilisierung des Prüfunterdrucks in der Kammer erreicht, was ohne sonstige Beeinflussung dazu führt, dass die Pumpeinrichtung analog zum stabilisierten Kammerdruck selbst mit stabilisierten Betriebsparametern, also mit zumindest näherungsweise konstanter Saugleistung arbeitet. Gemäß einem vorteilhaften Aspekt der Erfindung sind hierzu eine Ausgleichsgasquelle und eine Drosseleinrichtung als Teil des Regelkreises vorgesehen. Im laufenden Betrieb wird unter Aufrechterhaltung des Prüfunterdrucks ein kontinuierlicher Strom von Ausgleichsgas aus der Ausgleichsgasquelle durch die Drosseleinrichtung hindurch in den Innenraum der Prüfkammer eingeleitet. In allen Prüfszenarien einschließlich in Langzeitmessungen sowie unabhängig von Verschleiß und Zustand der Pumpen oder der Ausgasung des Prüflings wird hierdurch ein kontinuierlicher Gasstrom bereitgestellt, der von der bzw. den Pumpen ebenso kontinuierlich abgesaugt werden muss. Die Drosseleinrichtung sorgt dafür, dass das Prüfgas nur mit einem derart begrenzten Massenstrom in die Prüfkammer eingestreut wird, dass die Pumpleistung zwar einerseits für das Erreichen und Aufrechterhalten des gewünschten Prüfunterdrucks ausreicht. Andererseits führt der kontinuierlich eingestreute Ausgleichsgasstrom aber dazu, dass eine bestimmte untere Druckgrenze nicht mehr unterschritten werden kann. Vielmehr stellt sich ein eng begrenztes Druckfenster mit einem eng begrenzten Fenster der Saugleistung ein, innerhalb dessen die Messung vorgenommen werden kann. Innerhalb dieses eng begrenzten Druckfensters kann mit deutlich verbesserter Genauigkeit und Wiederholbarkeit aus dem gemessenen Partialdruck des Prüfgases auf die Leckrate des Prüflings geschlossen werden. Die Messgenauigkeit ist signifikant verbessert.

Die erfindungsgemäße Reduziereinrichtung kann aus verschiedenen, den Durchfluss des Ausgleichsgases steuernden bzw. begrenzenden Komponenten gebildet sein. Hierzu gehört auch die Wahl geeigneter Leitungen mit entsprechenden Widerstands- bzw. Leitwerten. In einer bevorzugten Ausführungsform der Erfindung umfasst die Reduziereinrichtung eine Blende. Mittels einer solchen Blende und deren Durchströmungswiderstand kann auf einfache Weise ein sehr hoher Gasdruck der Ausgleichsgasquelle in den vergleichsweise sehr niedrigen Prüfunterdruck überführt werden. Hierbei wird die besondere Eigenschaft einer Strömungsblende genutzt, wonach der durch die Blende hindurchtretende Volumenstrom oberhalb einer bestimmten Druckdifferenz nicht mehr oder nur noch kaum ansteigt. Bei entsprechender Auslegung der Blende arbeitet diese sozusagen in der Sättigung, nämlich dann, wenn sich im Blendenquerschnitt Schallgeschwindigkeit einstellt. Dieser Zustand wird auch als Verblockung bezeichnet, und führt zu einem quasi konstanten Ausgleichsgasvolumenstrom, was der oben bereits diskutierten Vergleichmäßigung der Pumpleistung und damit der Verbesserung der Messgenauigkeit zu Gute kommt.

Alternativ oder zusätzlich kann es zweckmäßig sein, dass die Reduziereinrichtung ein Steuerventil umfasst. Ein solches Steuerventil erlaubt insbesondere im vorgenannten Fall der Verblockung mit konstantem Volumenstrom eine Anpassung des Massenstromes des Ausgleichsgases an sich verändernde Verhältnisse, wie beispielsweise das Auftreten höherer oder niedriger Ausgasungs- und auch Leckraten. Hierbei wird sich der Umstand zu Nutze gemacht, dass beim Betrieb unter Verblockungsbedingungen der Massendurchfluss im Wesentlichen unabhängig vom Druck auf der Ausgangsseite der Blende und damit etwa proportional zum Druck auf der Eingangsseite der Blende ist. Dies erlaubt eine möglicherweise ausreichend stabile Grundeinstellung und darüber hinaus auch eine unkomplizierte und genaue Regelung des Durchflusses bzw. des Prüfunterdrucks.

In einer vorteilhaften Ausführungsform weist der Druckregelkreis einen Drucksensor und eine Steuereinheit zur Ansteuerung der Reduziereinrichtung auf. Durch Auswahl eines geeigneten elektronischen Drucksensors in Verbindung mit beispielsweise einem PC als Steuereinheit kann ein exakt abgestimmter Regelkreis realisiert werden, der zudem noch an verschiedene Regelbedingungen angepasst werden kann. In der Folge ist es möglich, den Prüfunterdruck mit hoher Genauigkeit zumindest näherungsweise konstant zu halten.

Für die Gaseinstreuung kommen verschiedene Gase bzw. Gasgemische in Betracht. In einer bevorzugten Ausführungsform ist als Ausgleichsgas der Ausgleichsgasquelle Luft vorgesehen. Luft ist ohne weiteres verfügbar und stellt deshalb keinen Kostenfaktor dar. Außerdem ist der Vorrichtungsaufwand für die Einstreuung von Luft gering. Allerdings enthält natürliche Luft 5ppm Helium. Helium hingegen wird im Rahmen der Erfindung bevorzugt als Prüfgas zum Nachweis der Leckagen verwendet, da damit insbesondere in Verbindung mit dem Massenspektrometer selbst sehr kleine Leckraten detektiert werden können. Durch den natürlichen Untergrund von Helium in Luft ist aber gegeben, dass ein Massenspektrometer niemals Null anzeigen kann. Je nach Anwendungsfall kann dies zwar für eine ausreichende Genauigkeit in der Messung ausreichen. In einer zweckmäßigen Alternative ist deshalb jedoch als Ausgleichsgas ein Gas vorgesehen, welches keine Bestandteile des Prüfgases, im vorgenannten bevorzugten Beispiel also keine Heliumbestandteile enthält. Versuche haben gezeigt, dass sich bei kritischen Applikationen (Messung niedriger Leckagen) auch der Untergrund durch Einstreuen eines solchen Gases etwas besser ausräumen lässt, was der Messgenauigkeit zugutekommt.

Ein Ausführungsbeispiel der Erfindung ist nachfolgend anhand der Zeichnung näher beschrieben.

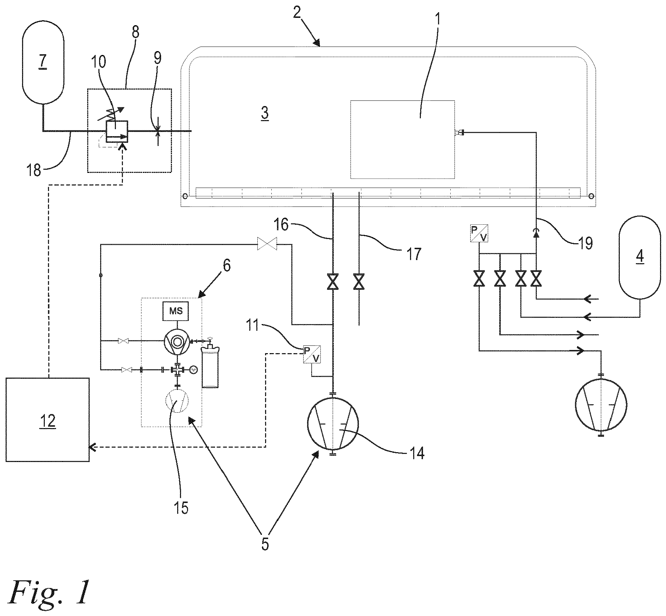

Fig. 1 zeigt in schematischer Blockdarstellung ein erfindungsgemäß aufgebautes Dichtheitsprüfsystem zur Dichtheitsprüfung eines nur angedeuteten Behälters 1. Das Dichtheitsprüfsystem umfasst eine Prüfkammer 2 mit einem Innenraum 3, eine Prüfgasquelle 4, eine Pumpeinrichtung 5 zur Erzeugung eines Prüfunterdrucks im Innenraum 3 der Prüfkammer 2, sowie ein Massenspektrometer 6. Außerdem weist das Dichtheitsprüfsystem Mittel für eine zumindest näherungsweise Konstanthaltung der Saugleistung der Pumpeinrichtung 5 auf, welche im gezeigten bevorzugten Ausführungsbeispiel eine Ausgleichsgasquelle 7, eine Drosseleinrichtung 8, einen Drucksensor 11 und eine Steuereinheit 12 zur Ansteuerung der Drosseleinrichtung 8 umfassen.

Zur Ausführung des Prüfverfahrens wird der Prüfling, also der hinsichtlich seiner Dichtheit zu prüfende Behälter 1 im Innenraum 3 der Prüfkammer 2 positioniert, woraufhin dann die Prüfkammer 2 dicht verschlossen wird. In den Innenraum 3 der Prüfkammer 2 münden eine Unterdruckleitung 16 und eine Flutungsleitung 17. Die Unterdruckleitung ist außenseitig mit einer Pumpeinrichtung 5 verbunden, mittels derer nun die im Innenraum 3 befindliche Luft abgesaugt wird. Außerdem ist die Unterdruckleitung 16 derart verzweigt, dass mittels eines Ventils noch das Massenspektrometer 6 zugeschaltet werden kann. Die Pumpeinrichtung 5 kann eine einzelne Unterdruckpumpe oder eine Kombination mehrerer Pumpen sein, und ist jedenfalls dazu ausgelegt, einen Prüfunterdruck im Innenraum 3 der Prüfkammer 2 von < 0,1 mbar zu erzeugen. Im gezeigten Ausführungsbeispiel ist die Pumpeinrichtung 5 durch die Kombination einer Vakuumpumpe 15 des Massenspektrometers 6 mit einer davon separaten Kammerpumpe 14 gebildet. Anfänglich erfolgt das Abpumpen der Luft aus dem Innenraum 3 allein mit der Kammerpumpe 14. Ab Erreichen eines bestimmten Unterdrucks wird dann die Vakuumpumpe 15 des Massenspektrometers 6 zugeschaltet. Gegebenenfalls kann dann die Kammerpumpe 14 abgeschaltet werden. Je nach Bauform ist es aber auch denkbar, die Evakuierung allein mit der Vakuumpumpe 15 des Massenspektrometers 6 vorzunehmen.

Das Innere des Behälters 1 ist über eine Behälterleitung 19 durch die Wand der Prüfkammer 2 hindurch mit einer Ventilanordnung verbunden, über welche der Behälter 1 bedarfsabhängig entleert oder befüllt werden kann. Diese Verbindung ist derart ausgelegt, dass keine reguläre strömungsleitende Verbindung mit dem Inneren des Behälters 1 und dem übrigen Innenraum 3 der Prüfkammer 2 besteht. Eine solche strömungsleitende Verbindung kann also allenfalls durch eventuelle Lecks des Behälters 1 und/oder durch Diffusionsprozesse durch die Wand des Behälters 1 zustande kommen. Zunächst wird das Innere des Behälters 1 über die Behälterleitung 19 mittels der genannten Ventileinrichtung mit einer Behälterpumpe 13 verbunden, welche ihrerseits das Innere des Behälters 1 evakuiert. Anschließend erfolgt eine Umschaltung der Ventilanordnung derart, dass die Prüfgasquelle 4 über die Behälterleitung 19 mit dem Inneren des Behälters 1 verbunden ist. Die hier nur schematisch angedeutete Prüfgasquelle 4 stellt ein Prüfgas bereit, welches im gezeigten bevorzugten Ausführungsbeispiel Helium ist, aber auch ein anderes inertes bzw. chemisch stabiles Gas bzw. Gasgemisch sein kann. Während also weiterhin die Luft aus dem Innenraum 3 der Prüfkammer 2 abgesaugt wird, wird nun das Prüfgas aus der Prüfgasquelle 4 durch die Behälterleitung 19 in den Behälter 1 eingeleitet.

Die Pumpeinrichtung 5 bleibt dauerhaft in Betrieb, wobei zunächst abgewartet wird, bis sich im Innenraum 3 der Prüfkammer 2 ein Prüfunterdruck von < 0,1 mbar einstellt. Der Prüfunterdruck ist kein fester Wert, muss aber für die einzelnen Prüfzyklen unterhalb eines vorgegebenen Grenzwertes von jedenfalls < 0,1 mbar liegen, damit das Massenspektrometer 6 zugeschaltet werden kann und brauchbare Messergebnisse liefert. Mit der Erfindung wird nun in nachfolgend näher beschriebener Weise die Saugleistung der Pumpeinrichtung 5 mittels eines Regelkreises zumindest näherungsweise konstant gehalten. Dies wird in der gezeigten bevorzugten Ausführungsform dadurch erreicht, dass im laufenden Betrieb mit dauerhaft laufender Pumpeinrichtung ein Prüfunterdruck eingestellt wird, der innerhalb eines eng bemessenen Intervalls liegt und vorteilhaft sogar zumindest näherungsweise konstant ist.

Hierzu wird im laufenden Betrieb unter Aufrechterhaltung des Prüfunterdrucks ein kontinuierlicher Strom von Ausgleichsgas aus der Ausgleichsgasquelle 7 durch die Drosseleinrichtung 8 hindurch in den Innenraum 3 der Prüfkammer 2 eingeleitet. Im einfachsten Fall handelt es sich beim Ausgleichsgas um Luft, welche aus der Umgebung entnommen und über die Drosseleinrichtung 8 eingespeist werden kann. Im gezeigten bevorzugten Ausführungsbeispiel umfasst die Ausgleichsgasquelle 7 einen angedeuteten Tank bzw. Druckbehälter, woraus ein Gas bzw. Gasgemisch bereitgestellt und in den Innenraum 3 eingeleitet wird. Dieses Ausgleichsgas enthält keine Bestandteile des Prüfgases, ist hier also frei von Helium.

Die Drosseleinrichtung 8 stellt sicher, dass das mit Umgebungsdruck oder mit Überdruck bereitgehaltene Ausgleichsgas eine entsprechende Druckreduzierung auf den im Innenraum 3 der Prüfkammer herrschenden Prüfunterdruck erfährt und dabei in seinem Volumenstrom auf ein bestimmtes Maß reduziert bzw. gedrosselt wird. Die Pumpeinrichtung 5 hat nun die Aufgabe, einen Gesamtgasstrom abzuführen, der sich aus der eingeleiteten Menge des Ausgleichsgases, aus vom Prüfsystem desorbierten Gasmengen sowie aus eventuell vom Behälter 1 kommenden Leckagemengen des Prüfgases zusammensetzt und außerdem auch noch andere Anteile aufweisen kann. Die Drosseleinrichtung 8 ist derart ausgelegt, dass der erreichte Prüfunterdruck bei laufender Pumpeinrichtung 5 innerhalb einer vorgegebenen Bandbreite bleibt. Es wird also wenig genug Ausgleichsgas eingeleitet, dass die Pumpleistung der Pumpeinrichtung 5 weiterhin ausreicht, um trotz des eingeleiteten Ausgleichsgasstromes einen gewünschten oberen Grenzwert des Prüfunterdrucks von jedenfalls < 0,1 mbar nicht zu überschreiten. Umgekehrt verhindert der eingespeiste bzw. eingestreute Ausgleichsgasstrom, dass trotz dauerhaft laufender Pumpeinrichtung 5 ein gewünschter unterer Grenzwert unterschritten wird. Selbst im fiktiven Extremfall ohne jede Desorption und ohne jede Leckagemenge aus dem Behälter 1 ist immer noch der eingestreute Ausgleichsgasstrom vorhanden, der der Pumpeinrichtung 5 eine bestimmte Pumpleistung abverlangt und daher ein Unterschreiten eines unteren Druckgrenzwertes verhindert. Jedenfalls wird hierdurch erreicht, dass die Pumpeinrichtung 5 in einem mehr oder weniger konstanten Betriebspunkt, zumindest aber in einem eng begrenzten Betriebsbereich arbeitet, womit ein ebenso eng begrenzter Bereich des Prüfunterdrucks einhergeht.

Hierzu umfasst die Drosseleinrichtung 8 im gezeigten bevorzugten Ausführungsbeispiel ein Steuerventil 10 zur Einstellung eines gewünschten Eingangsdruckes des Ausgleichsgases sowie eine nachgeschaltete Blende 9, die im Zustand der Verblockung betrieben wird und damit zu einer Begrenzung des Volumenstroms des Ausgleichsgases sowie zu einer entsprechenden Druckminderung führt. Hierdurch wird erreicht, dass sich ein etwa konstanter Volumenstrom einstellt, während der Massenstrom funktional, sogar näherungsweise linear von demjenigen Eingangsdruck der Blende 9 abhängt, der vom Steuerventil 10 bereitgestellt wird. Die Drosseleinrichtung 8 ist Teil eines Druckregelkreises. Es kann sich hierbei um einen mechanisch bzw. pneumatisch geregelten Druckregelkreis handeln. Vorliegend umfasst der Druckregelkreis neben der Drosseleinrichtung 8 noch einen elektronischen Drucksensor 11 und eine Steuereinheit 12 in Form eines Computers bzw. PCs. Mittels des Drucksensors 11 wird über die Unterdruckleitung 16 der herrschende Betriebsunterdruck, hier also der Prüfunterdruck laufend abgegriffen und in der Steuereinheit 12 ausgewertet. Über eine programmierte, bei Bedarf auch anpassbare Regelcharakteristik wirkt die Steuereinheit 12 auf die Drosseleinrichtung 8, genauer auf deren Steuerventil 10 derart ein, dass die Durchflussmenge des Ausgleichsgases angepasst und hierdurch der Prüfunterdruck zumindest näherungsweise konstant gehalten wird. Die Regelung wird dabei durch den oben beschriebenen funktionalen Zusammenhang zwischen Eingangsdruck und eingestreutem Gasmassenstrom begünstigt bzw. vereinfacht. Sich ändernde Desorptionsraten und/oder Leckagemengen bzw. -raten können auf diese Weise derart kompensiert werden, dass der abzusaugende Gesamtgasstrom zumindest näherungsweise konstant ist, womit auch die Betriebsparameter der Pumpeinrichtung 5 sowie korrespondierend dazu der herrschende Prüfunterdruck gleichermaßen zumindest näherungsweise konstant sind.

Abhängig vom Volumen der Prüfkammer 2, von der Saugleistung der Pumpeinrichtung 5 und vom Leitwert der Unterdruckleitungen 16 hat das erfindungsgemäße Dichtheitsprüfsystem eine individuelle Zeitkonstante T, die typischerweise im Bereich von 0,25 Sekunden bis etwa 4 Sekunden liegt, aber auch bis 15 Sekunden betragen kann. Unter einer konstanten Saugleistung der Pumpeinrichtung 5 stellt sich nach etwa 5T, also nach etwa 1,25 Sekunden bis etwa 20 Sekunden, bevorzugt nach etwa 2 Sekunden bis etwa 15 Sekunden ein stabiler Zustand des Heliumpartialdrucks im Vakuumsystem und damit auch der gemessenen Leckrate ein. Sofern sich nun der Prüfunterdruck in gewünschter Weise stabilisiert hat, wird das Massenspektrometer 6 über die Unterdruckleitung 16 auf den Innenraum 3 der Prüfkammer 2 aufgeschaltet. Es erfolgt nun mindestens eine Messung, im Regelfall eine Reihe von Messzyklen, in denen der Gasinhalt der Prüfkammer 2, nämlich das außerhalb des Behälters 1 im Innenraum 3 befindliche Gas auf Anteile des Prüfgases mittels des Massenspektrometers 6 untersucht wird. Infolge von Diffusionsprozessen und insbesondere auch infolge von Lecks, schadhaften Siegelnähten oder dergleichen gelangt nämlich ein Teil des Prüfgases aus dem Inneren des Behälters in den übrigen Innenraum 3 der Prüfkammer 2 und führt dort zu einem bestimmten Partialdruck. Dieser Partialdruck des Prüfgases kann mittels des Massenspektrometers 6 gemessen werden.

Der gemessene Partialdruck des Prüfgases dient nach Multiplikation mit einem maschinenabhängig festen Faktor als Maß für die zu ermittelnde Leckrate. Es gilt aber auch, dass der Partialdruck des Prüfgases dem Quotienten aus der eingestreuten Leckrate und der Saugleistung der Pumpeinrichtung 5 entspricht. Eine durch das Massenspektrometer 6 ermittelte Leckrate ist also nur dann stabil, wiederholbar und genau, wenn neben der tatsächlichen Leckrate auch die Saugleistung der Pumpeinrichtung 5 konstant ist. Aufgrund des in erfindungsgemäßer Weise stabilisierten Prüfunterdrucks wird die Saugleistung der Pumpeinrichtung 5 im laufenden Betrieb zumindest näherungsweise konstant gehalten, weshalb mit erheblich verbesserter Genauigkeit aus dem gemessenen Partialdruck des Prüfgases auf den Grad der Undichtigkeit des Behälters 1 geschlossen werden kann.

Nach erfolgter Messung kann die Prüfkammer 2 mittels der oben schon erwähnten Flutungsleitung mit Umgebungsluft geflutet und dann zur Entnahme des Behälters 1 geöffnet werden. Mittels Umschaltung der Ventilanordnung in der Behälterleitung kann das Prüfgas abgeblasen und der Behälter 1 geflutet werden.

Der oben beschriebene Regelkreis basiert auf einer angesteuerten Drosseleinrichtung zur geregelten Anpassung des Gasstroms aus der Ausgleichsgasquelle 7. Im Rahmen der Erfindung können aber auch andere Formen einer Regelung der Saugleistung der Pumpeinrichtung 5 vorgesehen sein. Beispielsweise kann es zweckmäßig sein, die Saugleistung mittels eines Ventils vor der Pumpeinrichtung 5, also vor der Kammerpumpe 14 und/oder vor der Vakuumpumpe 15, oder aber über die Drehzahl der Kammerpumpe 14 und/oder der Vakuumpumpe 15 zu regeln.

## Patentansprüche

1. Dichtheitsprüfsystem zur Dichtheitsprüfung eines Behälters (1), umfassend eine Prüfkammer (2) mit einem Innenraum (3) zur Aufnahme des Behälters (1), eine Prüfgasquelle (4) zur inneren Beaufschlagung des Behälters (1) mit einem Prüfgas, eine Pumpeinrichtung (5) zur Erzeugung eines Prüfunterdrucks im Innenraum (3) der Prüfkammer (2), sowie ein Massenspektrometer (6) zum Nachweis von Teilmengen des Prüfgases im Innenraum (3) der Prüfkammer (2), wobei die Pumpeinrichtung (5) dazu ausgelegt ist, einen Prüfunterdruck im Innenraum (3) der Prüfkammer (2) von < 0,1 mbar zu erzeugen,
**dadurch gekennzeichnet, dass** das Dichtheitsprüfsystem ferner einen Regelkreis für eine zumindest näherungsweise Konstanthaltung der Saugleistung der Pumpeinrichtung (5) umfasst.

2. Dichtheitsprüfsystem nach Anspruch 1,
**dadurch gekennzeichnet, dass** der Regelkreis für die Konstanthaltung der Saugleistung eine Ausgleichsgasquelle (7) und eine Drosseleinrichtung (8) umfasst, wobei die Ausgleichsgasquelle (7) mittels der Drosseleinrichtung (8) derart mit dem Innenraum (3) der Prüfkammer (2) verbindbar ist, dass sich im laufenden Betrieb unter Aufrechterhaltung des Prüfunterdrucks ein kontinuierlicher Gasstrom aus der Ausgleichsgasquelle (7) durch die Drosseleinrichtung (8) in den Innenraum (3) der Prüfkammer (2) einstellt.

3. Dichtheitsprüfsystem nach Anspruch 2,
**dadurch gekennzeichnet, dass** die Drosseleinrichtung (8) eine Blende (9) umfasst.

4. Dichtheitsprüfsystem nach Anspruch 2 oder 3,
**dadurch gekennzeichnet, dass** die Drosseleinrichtung (8) ein Steuerventil (10) umfasst.

5. Dichtheitsprüfsystem nach einem der Ansprüche 2 bis 4,
**dadurch gekennzeichnet, dass** der Druckregelkreis einen Drucksensor (11) und eine Steuereinheit (12) zur Ansteuerung der Drosseleinrichtung (8) aufweist.

6. Dichtheitsprüfsystem nach einem der Ansprüche 2 bis 5,
**dadurch gekennzeichnet, dass** als Ausgleichsgas der Ausgleichsgasquelle (7) Luft vorgesehen ist.

7. Dichtheitsprüfsystem nach einem der Ansprüche 2 bis 6,
**dadurch gekennzeichnet, dass** als Ausgleichsgas der Ausgleichsgasquelle (7) ein Gas vorgesehen ist, welches keine Bestandteile des Prüfgases enthält.

8. Dichtheitsprüfsystem nach einem der Ansprüche 1 bis 7,
**dadurch gekennzeichnet, dass** als Prüfgas Helium vorgesehen ist.

9. Prüfverfahren zur Dichtheitsprüfung eines Behälters (1) mittels eines Dichtheitsprüfsystems nach einem der Ansprüche 1 bis 8, umfassend folgende Schritte:
- Ein zu prüfender Behälter (1) wird im Innenraum (3) der Prüfkammer (2) positioniert,
- der Innenraum (3) der Prüfkammer (2) wird mittels der Pumpeinrichtung (5) mit einem Prüfunterdruck von < 0,1 mbar beaufschlagt,
- im laufenden Betrieb wird die Saugleistung der Pumpeinrichtung (5) mittels eines Regelkreises zumindest näherungsweise konstant gehalten,
- der zu prüfende Behälter (1) wird innenseitig mit einem Prüfgas beaufschlagt,
- mittels des Massenspektrometers (6) werden Teilmengen des Prüfgases im Innenraum (3) der Prüfkammer (2) bestimmt.

10. Prüfverfahren nach Anspruch 9,
**dadurch gekennzeichnet, dass** im laufenden Betrieb ein kontinuierlicher Strom von Ausgleichsgas aus einer Ausgleichsgasquelle (7) durch eine Drosseleinrichtung (8) in den Innenraum (3) der Prüfkammer (2) eingeleitet wird, wobei der Prüfunterdruck mittels des Druckregelkreises zumindest näherungsweise konstant gehalten wird.

## Claims

1. Leak-tightness testing system for leak-tightness testing of a container (1), comprising a test chamber (2) with an interior space (3) for accommodating the container (1), a test gas source (4) for charging the interior of the container (1) with a test gas, a pump device (5) for generating a test vacuum in the interior space (3) of the test chamber (2), and a mass spectrometer (6) for detecting partial quantities of the test gas in the interior space (3) of the test chamber (2), wherein the pump device (5) is configured to generate a test vacuum in the interior space (3) of the test chamber (2) of < 0.1 mbar,
**characterized in that** the leak-tightness testing system furthermore comprises a regulating loop for keeping the suction power of the pump device (5) at least approximately constant.

2. Leak-tightness testing system according to claim 1,
**characterized in that** the regulating loop for keeping the suction power constant comprises a compensation-gas source (7) and a throttle device (8), wherein the compensation-gas source (7) can be connected by means of the throttle device (8) to the interior space (3) of the test chamber (2) in such a way that, during ongoing operation, a continuous gas stream from the compensation-gas source (7) into the interior space (3) of the test chamber (2) through the throttle device (8) is established with the test vacuum maintained.

3. Leak-tightness testing system according to claim 2,
**characterized in that** the throttle device (8) comprises an orifice plate (9).

4. Leak-tightness testing system according to claim 2 or 3,
**characterized in that** the throttle device (8) comprises a control valve (10).

5. Leak-tightness testing system according to one of claims 2 to 4,
**characterized in that** the pressure-regulating loop has a pressure sensor (11) and a control unit (12) for control of the throttle device (8).

6. Leak-tightness testing system according to one of claims 2 to 5,
**characterized in that** air is provided as compensation gas of the compensation-gas source (7).

7. Leak-tightness testing system according to one of claims 2 to 6,
**characterized in that** a gas containing no constituent parts of the test gas is provided as compensation gas of the compensation-gas source (7).

8. Leak-tightness testing system according to one of claims 1 to 7,
**characterized in that** helium is provided as test gas.

9. Test method for leak-tightness testing of a container (1) by means of a leak-tightness testing system according to one of claims 1 to 8, comprising the following steps:
- positioning in the interior space (3) of the test chamber (2) a container (1) to be tested,
- applying a test vacuum of < 0.1 mbar to the interior space (3) of the test chamber (2) by means of the pump device (5),
- keeping the suction power of the pump device (5) at least approximately constant during ongoing operation by means of a regulating loop,
- charging with a test gas the interior of the container (1) to be tested,
- determining partial quantities of the test gas in the interior space (3) of the test chamber (2) by means of the mass spectrometer (6).

10. Test method according to claim 9,
**characterized in that**, during ongoing operation, a continuous stream of compensation gas is introduced from a compensation-gas source (7) into the interior space (3) of the test chamber (2) through a throttle device (8), wherein the test vacuum is kept at least approximately constant by means of the pressure-regulating loop.

## Revendications

1. Système de test d'étanchéité destiné à tester l'étanchéité d'un récipient (1), ledit système comprenant une chambre de test (2) pourvue d'un espace intérieur (3) destiné à recevoir le récipient (1), une source de gaz de test (4) destinée à soumettre l'intérieur du récipient (1) à un gaz de test, un dispositif de pompage (5) destiné à générer une dépression de test à l'espace intérieur (3) de la chambre de test (2), ainsi qu'un spectromètre de masse (6) destiné à détecter des quantités partielles du gaz de test dans l'espace intérieur (3) de la chambre de test (2), le dispositif de pompage (5) étant conçu pour générer dans l'espace intérieur (3) de la chambre de test (2) une dépression de test < 0,1 mbar, **caractérisé en ce que** le système de test d'étanchéité comprend en outre une boucle de régulation destinée à maintenir la puissance d'aspiration du dispositif de pompage (5) au moins approximativement constante.

2. Système de test d'étanchéité selon la revendication 1,
**caractérisé en ce que** le circuit de régulation destiné à maintenir la puissance d'aspiration constante comprend une source de gaz de compensation (7) et un dispositif d'étranglement (8), la source de gaz de compensation (7) pouvant être reliée à l'espace intérieur (3) de la chambre de test (2) à l'aide du dispositif d'étranglement (8) de manière à régler un flux de gaz continu allant de la source de gaz de compensation (7) jusque dans l'espace intérieur (3) de la chambre de test (2) par le biais du dispositif d'étranglement (8) pendant le fonctionnement avec la dépression de test.

3. Système de test d'étanchéité selon la revendication 2,
**caractérisé en ce que** le dispositif d'étranglement (8) comprend un diaphragme (9).

4. Système de test d'étanchéité selon la revendication 2 ou 3,
**caractérisé en ce que** le dispositif d'étranglement (8) comprend une soupape de commande (10).

5. Système de test d'étanchéité selon l'une des revendications 2 à 4,
**caractérisé en ce que** le circuit de régulation de pression comporte un capteur de pression (11) et une unité de commande (12) destinée à commander le dispositif d'étranglement (8).

6. Système de test d'étanchéité selon l'une des revendications 2 à 5,
**caractérisé en ce que** de l'air est prévu comme gaz de compensation de la source de gaz de compensation (7).

7. Système de test d'étanchéité selon l'une des revendications 2 à 6,
**caractérisé en ce qu'**un gaz qui ne contient aucun composant du gaz de test est prévu comme gaz de compensation de la source de gaz de compensation (7).

8. Système de test d'étanchéité selon l'une des revendications 1 à 7,
**caractérisé en ce que** de l'hélium est prévu comme gaz de test.

9. Procédé de test d'étanchéité d'un récipient (1) à l'aide d'un système de test d'étanchéité selon l'une des revendications 1 à 8, ledit procédé comprenant les étapes suivantes :
- un récipient (1) à tester est positionné à l'espace intérieur (3) de la chambre de test (2),
- l'espace intérieur (3) de la chambre de test (2) est soumis à une dépression de test < 0,1 mbar à l'aide du dispositif de pompage (5),
- pendant le fonctionnement, la puissance d'aspiration du dispositif de pompage (5) est maintenue au moins approximativement constante à l'aide d'un circuit de commande,
- le récipient (1) à tester est soumis à un gaz de test à l'intérieur,
- des quantités partielles du gaz de test dans l'espace intérieur (3) de la chambre de test (2) sont déterminées à l'aide du spectromètre de masse (6).

10. Procédé de test selon la revendication 9,
**caractérisé en ce que**, pendant le fonctionnement, un flux continu de gaz de compensation provenant d'une source de gaz de compensation (7) est introduit dans l'espace intérieur (3) de la chambre de test (2) par le biais d'un dispositif d'étranglement (8), la dépression de test étant maintenue au moins approximativement constante à l'aide du circuit de régulation de pression.
